# EUROPEAN PATENT SPECIFICATION

(11) **EP 2 924 500 B1**
(45) Date of publication and mention of the grant of the patent: **11.04.2018**
(21) Application number: 15159873.7
(22) Date of filing: 19.03.2015
(51) Int. Cl.: H01S 3/00, G02F 1/39, G02F 1/37

(54) **Method for generation of femtosecond light pulses, and laser source thereof**
Verfahren zur Erzeugung von Femtosekunden-Lichtimpulsen und Laserquelle davon
Procédé pour la génération d'impulsions de lumiere femtoseconde, et une source de ceux-ci

(30) Priority: 25.03.2014 LT 2014503
(43) Date of publication of application: 30.09.2015
(73) Proprietor: UAB "EKSPLA", 02300 Vilnius (LT)
(72) Inventor: Rusteika, Nerijus, 10231 Vilnius (LT); Danilevicius, Rokas, 04305 Vilnius (LT); Zaukevicius, Audrius, LT-06152 Vilnius (LT); Michailovas, Andrejus, 06325 Vilnius (LT)
(74) Representative: Draugeliene, Virgina Adolfina

(56) References cited:
- EP-A1- 2 557 455
- CN-A- 1 560 696
- ANNE HARTH ET AL: "Two-color pumped OPCPA system emitting spectra spanning 1.5 octaves from VIS to NIR", OPTICS EXPRESS, VOL. 16, NO. 7, PP. 4479-4486 (2008), vol. 20, no. 3, 30 January 2012 (2012-01-30), pages 3076-3081, XP055202625, ISSN: 2161-2072, DOI: 10.1364/OE.20.003076
- J ADAMONIS ET AL: "High-energy Nd : YAG-amplification system for OPCPA pumping", QUANTUM ELECTRONICS, vol. 42, no. 7, 31 July 2012 (2012-07-31), pages 567-574, XP055188502, ISSN: 1063-7818, DOI: 10.1070/QE2012v042n07ABEH014689
- S. HÄDRICH ET AL: "Degenerate optical parametric amplifier delivering sub 30 fs pulses with 2GW peak power", OPTICS EXPRESS, VOL. 16, NO. 7, PP. 4479-4486 (2008), vol. 16, no. 24, 24 November 2008 (2008-11-24), page 19812, XP055203220, ISSN: 2161-2072, DOI: 10.1364/OE.16.019812

## Description

### Technical field to which invention relates

This invention is related to lasers, particularly to ultrafast lasers, and is destined to obtain femtosecond light pulses. More specifically, this invention is related to methods and laser sources for generation of ultrashort light pulses with durations less than 100fs and energies up to one hundred millijoules.

This invention can be used for realization of compact and cost-effective systems of optical parametric chirped pulse amplification (OPCPA) featuring output radiation required for world-leading scientific research, medicine and industry.

### Indication of the background art

In medical applications, such as micro-operations, femtosecond (fs) pulses have advantages over longer pulses, because they do not have a destructive impact on surrounding tissues. In micro fabrication, femtosecond pulses ensure better fabrication accuracy almost without affecting adjacent areas and achieve greater processing speed, which is very important in industry. Pulses with a duration not exceeding 100fs and peak power of more than several tens of gigawatts open up new possibilities in science.

There are known sources of femtosecond light pulses comprising a broadband active medium titanium-sapphire (Ti:S) based oscillator followed by at least one multipass power amplifier (as for example, is presented in M.P.Kalashnikov et al., "Characterization of a nonlinear filter for the front-end of a high contrast double-CPA Ti:sapphire laser", Opt. Express 12, 5088-5097 (2004)), or chirped pulse amplifier (US5720894 (Perry et al.))*.* The broadband radiation of Ti:S active medium, which spans from a long-wavelengths region of visible light up to near infrared, ensures pulse duration from few to few tens of femtoseconds, or alternatively offers possibilities for wavelength tuning. Electromagnetic radiation from 700nm to 1000nm has many advantages in numerous applications.

A drawback of Ti:S oscillators and amplifiers lies in a fact that they are pumped by a second-harmonic radiation of another solid-state laser or radiation of the argon laser. Moreover, an effective cooling is necessary due to thermal effects occurring inside the Ti:S active medium. Ti:S based laser sources, especially amplifiers, require temperature and mechanical stabilization equipment assisted by electronic feedback loops in order to ensure output pulse energy reproducibility and high beam quality. Ti:S lasers are complex and cost-consuming, while the overall electric-to-optical energy conversion is low.

An alternative to the described Ti:S master oscillator-power amplifier systems (MOPAs) are systems of optical parametric amplification. Herein, a broadband pulse of signal wave is amplified by a narrowband pump pulse inside a nonlinear crystal of optical parametric amplification. Firstly, gain narrowing, which is a drawback of quantum amplifiers, is avoided. Secondly, single-pass gain of optical parametric amplification crystal may exceed 10³, while thermal effects do not take place since amplification of radiation occurs through nonlinear frequency conversion without absorption. To attain millijoule-energy pulses, several parametric amplification stages are necessary, while pulses have to be stretched in time, i.e. chirped, prior to amplification. This is a known technique of optical parametric chirped pulse amplification (OPCPA). In OPCPA systems, Ti:S oscillators are also widely used ensuring a broad spectral band for ultrashort initial pulse of signal wave (seed) to be formed (see, US6775053 (Jovanovic et al.); R.T.Zinkstok et al., "High-power parametric amplification of 11.8-fs laser pulses with carrier-envelope phase control", Opt. Lett. 30, 78-80 (2005); S. Witte et al., "Generation of few-cycle terawatt light pulses using optical parametric chirped pulse amplification", Opt. Express 13, 4903-4908 (2005); N.Ishii et al., "Multimillijoule chirped parametric amplification of few-cycle pulses," Opt. Lett. 30, 567-569 (2005); S. Witte et al., "A source of 2 terawatt, 2.7 cycle laser pulses based on non-collinear optical parametric chirped pulse amplification", Opt. Express 14, 8168-8177 (2006)). Additionally, a part of Ti:S radiation may be utilised for pump-pulse source synchronization, i.e. synchronization of pump pulse with the seed pulse [WO2006122709 (*Ishii et al.*); N.Ishii et al., "Seeding of an eleven femtosecond optical parametric chirped pulse amplifier and its Nd3+ picosecond pump laser from a single broadband Ti:Sapphire oscillator," Sel.Tops.in QE12, 173-180 (2006); J.Rothhardt et al., "Compact fiber amplifier pumped OPCPA system delivering Gigawatt peak power 35 fs pulses", Opt. Express 17, 24130-24136 (2009); A.Harth et al., "Two-color pumped OPCPA system emitting spectra spanning 1.5 octaves from VIS to NIR", Opt. Express 20, 3076-3081 (2012)].

One of technical tasks that must be solved in OPCPA systems employing the Ti:S oscillator as a primary source is - what active medium of a pump-pulse source has to be selected and how it is going to be synchronized with said Ti:S oscillator. In principle, passive (optical) synchronization, wherein a part of oscillator's radiation is utilized to seed the pump-pulse source, ensures small mutual jitter between seed and pump pulses of the OPCPA system. This is the only way to achieve high reproducibility of amplified pulses of signal wave. However, stimulated emission maxima of most high-gain active media are far from a peak of Ti:S luminescence band. Nd-doped active media are good examples of media with high gain coefficient, also are thermally and mechanically stable, and therefore, may operate at high repetition rates and in high-power regime. Nd:YAG and Nd:YVO₄ are particularly suitable active media for high-power amplifiers but are poorly compatible with Ti:S oscillators: Ti:S radiation has low energy at amplification peak (1064nm) of Nd:YAG and Nd:YVO₄ Thus, direct seeding of said Nd-doped media by Ti:S oscillators is highly inefficient and frequently exhibits bright background of spontaneous emission.

In an OPCPA system presented in the article of *Ishii et al.* (2006), a pump pulse is amplified in Nd:YLF amplifier with a subsequent frequency doubling in a second-harmonic generator. A 1053nm spectral line for Nd:YLF active medium is obtained directly from radiation of an ultra-broadband Ti:S oscillator, which is also a source of ultrashort pulse of initial signal wave (seed). This solution ensures passive synchronization between pulses of signal and pump waves, however, is energetically inefficient due to low brightness of Ti:S radiation at 1053nm wavelength.

WO2006122709 (Ishii et al.) presents an OPCPA system having a single primary laser source for obtaining pulses of seed (initial signal wave) and pump wave radiation, which comprises a mode-locked Ti:S oscillator. An ultrashort seed pulse coincides with an output pulse of said Ti:S oscillator. A pulse destined to be a pump pulse, which is amplified in a neodymium or ytterbium based solid-state amplifier (followed by a second-harmonic generator), is obtained by spectrally shifting the output pulse of Ti:S oscillator in a photonic crystal fiber (PCF) to match spectral lines of Nd or Yb active media. Technical difficulties encountered in the use of PCF fibers comprise strict requirements for laser beam pointing and energy stability. Spectral shifting caused by nonlinear effects occurs only in case laser radiation hits a fiber core, which is only a few microns in diameter. Oscillator's radiation coupling into the photonic crystal fiber and keeping laser beam direction stable for a long term is not an easy task. Another aspect - PCF fiber's damage threshold is only slightly above the energy necessary to cause nonlinearities. Therefore, it is necessary to ensure high energy stability for nonlinear effects to occur while not to damage the fiber.

The previously described systems of optical parametric amplification, comprising Ti:S oscillator as the single primary laser source, even without Ti:S amplifiers and elements for spectral broadening (since Ti:S spectral band ensures pulse durations of signal pulses of just a few femtoseconds), are complex and expensive.

In the meantime, systems employing solid-state lasers based on other broadband active media, such as Yb:KGW or Yb:KYW, as well as Yb, Er, Yb/Er, Ho, Tm fiber lasers, become popular. Major advantages of Yb-doped active media - their absorption peak falls within a spectral region of laser diodes; secondly, a broad spontaneous emission band enables to attain ultrashort pulse duration. A possibility of diode-pumping allows for substantially smaller dimensions of laser system. Other advantages of Yb-doped active media are: low generation threshold, high stimulated emission cross-section and good thermal conductivity resulting in high average power of output radiation. This makes Yb-based solid-state lasers significantly simpler, more reliable and cost-effective as compared with Ti:S lasers.

Yb:KGW solid-state lasers achieve pulse durations in the range from 50fs up to a few hundred femtoseconds, while a central wavelength is close to amplification peak of Nd-doped active media. Energy, which is attained with mode-locked oscillators based on Yb-doped crystalline active media, exceed 200nJ, while up to several hundred microjoules are attained with oscillator-amplifier systems. In order to obtain a wider tuning region, or for pulse durations of down to 30fs, spectral broadening is necessary. The most widely used solution - continuum generation (also called white light generation) in solid-state bulk crystals or photonic crystal fibers. It is important to note that conditions of continuum generation (which takes place due to several nonlinear phenomena occurring simultaneously) in said materials, as well as properties of the generated continuum radiation are different. A threshold for continuum generation in PCF fibers is much lower than in bulk crystal, and, therefore, even oscillator may provide pulse with sufficient energy. The generated continuum at the output of PCF fiber, however, is hardly compressible down to sub-100fs pulse durations (i.e. dephasing of spectral components cannot be compensated with ordinary dispersive pulse compressors). On the contrary, bulk continuum generators, which ensure a highly compressible continuum, require energies higher than energies of said oscillators. Hence, the OPCPA system must have an additional amplifier for amplification of the femtosecond seed radiation. This again rises a complexity and price of the system.

In R.Antipenkov et al., "Femtosecond Yb:KGW MOPA driven broadband NOPA as a frontend for TW few-cycle pulse systems", Opt. Express 19, 3519-3524 (2011) an OPCPA is presented providing pulses of about 10fs at 800nm, which employs a single primary laser source for obtaining seed and pump pulses comprising an Yb:KGW master oscillator-power amplifier:
- an ultrashort seed pulse (which is a pulse of initial signal wave) is formed from radiation of said Yb:KGW master oscillator-power amplifier by generating continuum in sapphire plate;
- a pump pulse is formed by frequency doubling of radiation of said Yb:KGW master oscillator-power amplifier.

Due to possibility to diode-pump the Yb:KGW active medium, the system of *Antipenkov et al.* is more stable and reliable than Ti:S based OPCPA systems described above. However, energy efficiency is low since parameters of amplifiers have to be excessive due to peculiarities of Yb-doped active media. Pulse energy of 20µJ is attained after two stages of parametric amplification in the OPCPA system of *Antipenkov et al.* A further amplification up to millijoules is not possible when using the same MOPA.

In C.Aguergaray et al., "Parametric amplification and compression to ultrashort pulse duration of resonant linear waves", Opt. Express 15, 5699-5710 (2007) another OPCPA is presented. The system providing ultrashort pulses at 870nm employs a single primary laser source for obtaining seed and pump pulses which comprises an Yb:KGW oscillator:
- an ultrashort seed (initial signal wave) pulse is formed from non-amplified radiation of said Yb:KGW oscillator by spectral broadening (white light generation) it in a photonic crystal fiber;
- a pump pulse is formed by amplifying radiation of said Yb:KGW oscillator in Yb-doped fiber amplifier and by further frequency doubling in a second-harmonic generator.

In said solution, attention is concentrated into control of energy and temporal characteristics of oscillator's radiation in order to achieve white light radiation at the output of said PCF fiber with such relative phases between spectral components that this radiation is compressible down to about 50fs with ordinary dispersive compressors. In the solution of *Aguergaray et al.* with careful control of oscillator's parameters ultrashort pulses with duration of 50fs, but not less, were obtained. Secondly, a fiber amplifier, which was chosen in order to achieve higher pulse repetition rates, does not allow for attaining energies of pump pulses that are achievable in amplifiers based on bulk solid-state active media, especially Nd:YAG and Nd:YVO₄ Therefore, said solution does not provide a method and a laser source thereof for obtaining sub-30fs pulses with energies within millijoules.

In S.Hädrich et al., "Degenerate optical parametric amplifier delivering sub 30 fs pulses with 2GW peak power", Opt. Express 16, 19812-19820 (2008) yet another OPCPA is presented. The system providing 30fs pulses at 1030nm also comprises the Yb:KGW oscillator:
- an ultrashort seed pulse is obtained by broadening a spectrum up to 68nm of said oscillator in a single-mode optical fiber;
- a pump pulse is obtained amplifying radiation of said oscillator in a specially-designed Yb-doped rod type photonic crystal fiber featuring an ability to attain 1mJ-level energy; further, a second-harmonic is generated.

Pulse energy of 81µJ is attained after two stages of parametric amplification at degenerate regime. A further amplification up to millijoules is not provided. Moreover, the degenerate optical parametric amplification faces several limitations. First, since wavelengths of signal and idler waves coincide, wavelength tuning of output radiation is possible only as far as the pump radiation spectral band allows. Second, the idler wave radiation usually possess low beam quality because it reflects energy and phase fluctuations of the pump radiation. This would deteriorate the whole output beam.

An alternative to oscillators with free-space components - fiber laser sources. Fiber lasers based on single-mode optical fibers feature high beam quality. Also, fibers have a high surface-area-to-volume ratio, therefore, efficient cooling may be achieved. This allows for operation at high powers and at high repetition rates. Other advantages of fiber laser sources are: resistance to environmental factors (changes in temperature or mechanical vibrations), easy transportation of radiation, an ease of assembling a system. Moreover, a stimulated emission peak of Yb ions incorporated into a glass matrix of the optical fiber, which is at about 1030nm, is close to the amplification line (1064nm) of Nd:YAG and Nd:YVO₄ active media, while luminescence band spans up to 1100nm at the long-wavelengths side. As a result, output radiation of an Yb-based fiber laser oscillator or an oscillator-amplifier is suitable for seeding of Nd-amplifiers.

US8023538 (Marcinkevicius et al.) presents several configurations of OPCPA systems comprising fiber oscillator-based primary laser sources. Given examples describe utilisation of femtosecond fiber oscillators, mainly Er and Tm, and subsequently cryogenically cooled Yb-based amplifiers. Duration of parametrically amplified pulses at the output of the OPCPA system is about 10fs. Also, high beam quality is ensured. Additionally, a possibility of nonlinear radiation conditioning stages during initial signal (seed) or/and pump pulse formation is mentioned, however, practical examples of initial signal radiation conditioning are limited only to continuum generation at highly-nonlinear fibers.

In the solution of *Marcinkevicius et al.,* a performance and reliability of the primary laser source is not guaranteed as well. Mainly, because femtosecond oscillators are more sensitive to system parameters and external impacts, as compared to picosecond oscillators. Also, the OPCPA system of *Marcinkevicius et al.* operates with the broadband pump-pulse amplifiers. This are no configurations with narrowband Nd-based pump pulse amplifiers. Additionally, there is a lack of practical examples of how to employ the Yb-doped oscillator in the OPCPA system aiming to obtain millijoule-level pulses. Conditions for continuum generation in a bulk solid-state material (crystal) are lacking.

In A.Fernández et al., "Broadly tunable carrier envelope phase stable optical parametric amplifier pumped by a monolithic ytterbium fiber amplifier", Opt. Lett. 34, 2799-2801 (2009) yet another primary laser source for OPCPA system is presented. It comprises a femtosecond Yb-based fiber oscillator operating at 1040nm. Formation of an ultrashort seed pulse for parametric amplification comprises pulse stretching of the oscillator's output pulse, followed by power amplification in a sequence of fiber amplifiers up to about 9µJ of energy. Yet a further formation of the seed pulse includes pulse compression, wavelength conversion in a second-harmonic generation crystal, continuum generation in sapphire plate and stabilization of carrier-envelope-phase (optical phase under pulse envelope) in OPA crystal. It is stated that, with the use of said primary laser source, an OPCPA system with passive synchronization of seed and pump pulses may be easily implemented, because radiation of Yb-doped fiber oscillator is suitable for seeding of Nd-amplifiers.

In the solution of *Fernández et al.* an all-fiber system of formation and amplification of the broadband seed pulse is composed from these elements: 480 meters of single-mode optical fiber destined to stretch a pulse up to 350ps; 1.5m of highly-Yb-doped single-mode fiber and 3m of large-mode-area double-clad fiber destined to amplify; also, some additional components such as fiber acousto-optic modulators for reduction of spontaneous emission background and mode-size adapters. The described multicomponent fiber system is necessary for amplification of the femtosecond pulse up to a few microjoules to overcome continuum generation threshold in bulk sapphire. But it is complex and highly inefficient.

The closest prior art of this invention is the solution of Harth et al., "Two-color pumped OPCPA system emitting spectra spanning 1.5 octaves from VIS to NIR", Opt. Express 20, 3076-3081 (2012). OPCPA system presented in the article of *Harth et al.* (2012) comprises a single primary laser source which is Ti:S oscillator providing ultrashort radiation which is splitted into radiation of a seed arm an radiation of the pump arm. Further, two stages of non-collinear optical parametric amplification (OPA) with a white light generation between them are present. The first OPA stage serves as an amplifier for increasing energy of pulses of said radiation of the seed arm up to energy necessary to overcome continuum generation threshold in a crystalline bulk material (namely, in BaF₂ plate). This way a sub-5fs seed pulse is formed, without a use of quantum amplifier in the seed arm, which is further parametrically amplified in said second OPA stage. Said radiation of the pump arm is amplified in the multidisk regenerative Yb:YAG amplifier, and then second- and third-harmonics are generated, which are destined to be pump pulses for said first and OPA stages, respectively. Yb:YAG is a broadband active medium which overlaps well the luminescence band of Ti:S active medium. Therefore, a part of radiation separated from radiation of Ti:S is suitable to seed Yb:YAG amplifier.

However, particular conditions such as high-brightness pumping schemes and effective cooling geometry must be applied to the Yb:YAG active medium, which features a quasi-three level quantum structure, in order to avoid generation of superfluorescence radiation and/or amplified spontaneous emission and in order to ensure reproducibility of output characteristics and high beam quality. The multidisk thin-disk architecture of the Yb:YAG amplifier in the *Harth et al.* solution is sophisticated and requires precise fabrication technology that increases amplifier's price. There are few manufacturers of multidisk modules of active media. Moreover, Ti:S based front-end of the system requires temperature and mechanical stabilization equipment assisted by electronic feedback loops in order to ensure output pulse energy reproducibility and high beam quality. Finally, due to different wavelengths of pump pulses in said two OPA stages energy of signal wave pulse amplified the first OPA stage is not raised in the second OPA stage. Therefore, in addition to the drawbacks related to the utilisation of the Ti:S oscillator and Yb:YAG amplifier, the solution of *Harth et al.* does not provide a configuration of OPCPA system for obtaining sub-30fs millijoule-energy pulses in NIR spectral region.

### Technical problem to be solved

The aim of this invention is to simplify complexity of a method and a laser source thereof for generation of femtosecond light pulses with durations less than 100fs, preferable from 5fs to 30fs, and peak powers exceeding 30GW. It is also an aim of this invention to provide an OPCPA system featuring a simplified configuration, composed of solid-state and fiber-based optical components, and ensuring high stability and overall power efficiency.

### Disclosure of invention

This is achieved by the method for generation of femtosecond light pulses, and laser source thereof according to claims 1-15.

### Advantages of the invention

A distinct feature and an advantage of the method of this invention is that at initial stage a relatively narrowband radiation is generated, a bandwidth of which corresponds to a few-picosecond duration of transform-limited pulses. Whereas, finally, femtosecond pulses are generated.

Another distinct feature of the method of this invention is that said spectral broadening of initial radiation is done just up to 20nm bandwidth only. This does not require high energy of initial pulses or sophisticated optical elements such as photonic crystal fibers.

According to the method of this invention, femtosecond light pulses are generated in two or three stages (in a general case, more stages may be present) of optical parametric amplification with white light generation implemented between said first and second stages of optical parametric amplification. Said first stage of optical parametric amplification serves as a stage of radiation preparation needed for white light generation. Only a narrowband radiation has to be amplified in a quantum amplifier. In all optical parametric amplification stages pulses of seed and pump radiations are optically synchronized since are originated from radiation of a single primary laser source.

Another important distinct feature of the method and laser source of this invention is: pump pulses for the first and the third OPA stages are narrowband (<1nm), since are obtained from radiation amplified in the Nd-based quantum amplifier, which actually may comprise a sequence of Nd-amplifiers; while pump pulses for the second OPA stage have a bandwidth of up to 20nm, since are obtained from a part of signal wave radiation amplified in the first OPA stage.

Another aspect of the present invention is - at all stages a non-collinear optical parametric chirped pulse amplification takes place. A non-collinear interaction ensures a wide band of parametric amplification. While pulse chirping, hence pulse stretching in time, ensures efficient energy conversion from the pump wave into the signal wave. Before the first stage of optical parametric amplification, pulses of seed radiation become chirped as a consequence of self-phase modulation while accomplishing spectral broadening in a single-mode optical fiber. Alternatively, pulses of seed radiation may be chirped in supplementary dispersive optical elements. Before the second stage of optical parametric amplification, pulses of seed radiation become chirped due to dispersive properties of the white light generator. Pulses of seed radiation for the third parametric amplification stage are stretched deliberately in pulse stretchers to achieve desired pulse durations and highest parametric gain.

Yet another important aspect and advantage of the present invention - peak powers achieved at the output of the first optical parametric amplification stage ensure white light generation in crystalline bulk materials.

The laser source for generation of femtosecond light pulses according to this invention comprises a low-energy picosecond primary laser source, for example Yb-doped fiber laser, compatible with the solid-state Nd-based quantum amplifier, also an ordinary crystalline bulk material, such as sapphire or YAG plate, for white light radiation generation, hence is simple and reliable. The overall relationship between components of the whole system results in high power efficiency. Moreover, the laser source of this invention has a relatively low cost as compared to the known laser systems providing analogous characteristics of output radiation.

To summarize, the method for generation of femtosecond light pulses of this invention allows for generation of pulses with durations from 30fs down to 5fs in near infrared spectral range. The laser source of femtosecond light pulses is simpler, more reliable and has a lower cost, as compared to the known prior art laser sources. A hybrid optical scheme, comprising fiber-optical and solid-state components, ensures high overall system efficiency, pulse energy and duration reproducibility, also, good beam quality. The laser system of this invention consisting of three optical parametric amplification stages generates multimillijoule-level femtosecond output pulses. It is a good alternative to widely used Ti:S laser systems. The laser system of this invention consisting of two optical parametric amplification stages generates femtosecond pulses with energies of up to tens of microjoules, what is an alternative for Yb:KGW-based systems.

### Brief description of drawings

The invention is explained in greater detail in the following drawings, wherein:
Fig.1 - a functional block diagram illustrating a principle of a method of this invention.
Fig.2 - a block diagram of a laser source of this invention with only principal components shown necessary to accomplish the method of Fig.1.
Fig.3 - a block diagram of a preferable embodiment of this invention.

### Detailed description of embodiments of the invention

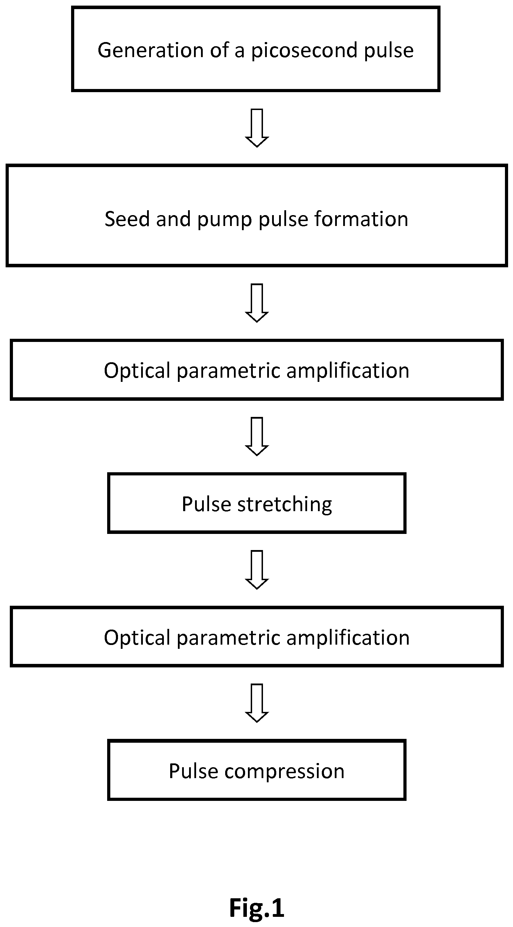

The method of this invention for generation of femtosecond light pulses is generally a generation of an initial ultrashort laser radiation and its optical parametric amplification, while pump pulse is also originated from the same source of initial ultrashort laser radiation. Said parametric amplification increases pulse energy and also shortens the pulse. The procedure comprises the following main steps (Fig.1):
- generation of a picosecond pulse;
- formation of seed and pump pulses;
- at least two optical parametric amplification (OPA) stages, in which amplification of chirped pulses occurs, i.e. seed pulses are stretched in time prior to parametric amplification.

More specifically, formation of a seed pulse for a second OPA stage comprises radiation preparation for white light (WL) generation in a white light generator and WL generation itself. Said radiation preparation for WL generation comprises simultaneous pulse stretching and spectral broadening of the initial picosecond pulse, also amplification and a consequent pulse compression, while said amplification is performed in a first OPA stage.

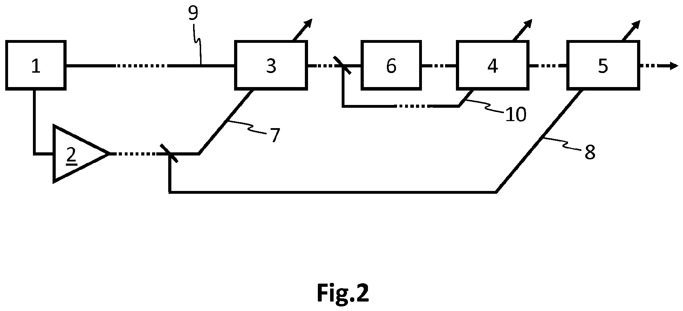

A laser source (Fig.2) accomplishing the method of this invention is an OPCPA system, wherein seed and pump pulses at each stage of optical parametric amplification satisfy conditions of non-collinear phase matching, mainly comprising: a single primary laser source 1 of ultrashort radiation, a narrowband (bandwidth < 1nm) quantum amplifier 2 and two or more OPA crystals 3, 4, 5; said quantum amplifier 2 comprises at least a regenerative amplifier; a white light generator 6, preferably crystalline, situated between the first OPA crystal 3 and the second OPA crystal 4. A narrowband radiation of a pump arm originated from said primary laser source 1 is amplified regeneratively and after additional conditioning results in pump pulses 7, 8. Whereas, a broadband radiation of a seed arm originated from said primary laser source 1 is amplified without regenerative amplification. Pulses of the preconditioned radiation 9 are amplified parametrically in the first OPA crystal 3. Pulses of pump radiation 10 for the second OPA stage have a bandwidth of up to 20nm, since are obtained from signal wave radiation amplified in the first OPA stage, and carry energy that was not employed for white light radiation generation in said white light generator 6.

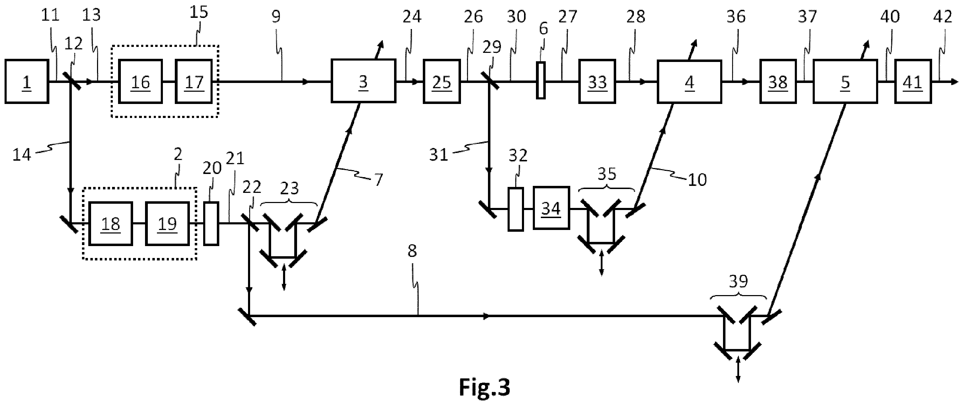

In Fig.3, a detailed block diagram of a preferable configuration of the laser source of this invention is depicted, in which the source comprises three stages of non-collinear optical parametric amplification and at each of said parametric amplification stages chirped pulses of signal wave are amplified. Ultrashort radiation 11 of the primary laser source 1, characterized by a central wavelength λ₀ and a spectral width Δλ₀, is splitted with a power splitter 12 into two parts: radiation 13 of a seed arm and radiation 14 of a pump arm. A ratio between pulse energies of said radiations 13, 14 may be from 10:90 up to 90:10. The central wavelength λ₀ of said ultrashort radiation 11 of the primary laser source 1 is selected to overlap a stimulated emission peak of a solid-state active medium, preferably one of Nd-doped active crystals, while the spectral width Δλ₀ corresponds to a transform-limited pulse with duration of a few picoseconds. A mode-locked Yb-based fiber oscillator is particularly suitable for the objectives of this invention, because it features a broad luminescence band and overlaps amplification peaks of many Nd-doped active media (Nd:YAG, Nd:YVO₄ Nd:YLF, etc). In the mode-locked regime Yb fiber lasers irradiate transform-limited pulses with duration from 1ps to 5ps. Output energy of Yb fiber oscillators does not exceed 100pJ, while Yb MOPAs provide up to 10nJ.

Further, said radiation 13 of the seed arm propagates through radiation conditioning system 15 destined to chirp the pulse. If necessary, it includes a preamplifier 16 which increases pulse energy up to energies required for self-phase modulation (hence, spectrum broadening and pulse stretching) to occur in a nonlinear-dispersive optical element 17. A spectrally broadened and temporally stretched pulse, a bandwidth Δλ₁ of which is about (10÷20)nm, is directed into the first OPA crystal 3 as a pulse of seed radiation 9. Said optical elements 16 and 17 may also be fiber-based. For example, for a picosecond few-nJ energy pulse at an output of the preamplifier 16, said bandwidth of up to 20nm may be attained in a standard single-mode optical fiber with a length of ten to few tens of meters. Self-phase modulation arising due to nonlinearities of the fiber, manifests not only as broadening of radiation spectrum but also as dephasing of spectral components. Said dephasing of spectral components is also influenced by dispersive properties of fiber components. The resultant pulse of seed radiation 9 is chirped and lasts in time from 10ps to 20ps. Another important feature of said chirped pulse of seed radiation 9 at the output of said conditioning system 15 - due to nonlinear and dispersive properties of the optical fiber chirp profile is such that dephasing of spectral components may be cancelled with ordinary dispersive pulse compressors, for example, a pair of prisms or gratings.

According to another modification of this invention, said nonlinear-dispersive optical element 17 is a combination of a single-mode optical fiber and a chirped fiber Bragg gratings enabling a greater pulse chirping, and therefore, stretching in time up to 100ps.

According to yet another modification of this invention, said ultrashort radiation 11 of the primary laser source 1 features dephasing among its spectral components, i.e. pulses are already chirped. It may be achieved with a configuration of the primary source 1 comprising a fiber master oscillator without a chirped Bragg grating for compensation of dispersion of fiber components inside fiber-based resonator. In this case, pulses of said radiation 13 of the seed arm are already chirped and said spectral broadening up to (10÷20)nm may be achieved with other parameters of the optical elements 16, 17 of said conditioning system 15. Herein, pulses of radiation 14 of the pump arm are also chirped.

Simultaneously, formation of pump pulses for the first and the third stages of optical parametric amplification is performed. Firstly, said radiation 14 of the pump arm, separated from initial ultrashort radiation 1 with the help of a power splitter 12, is amplified in said quantum amplifier 2 composed of one or several solid-state amplifiers 18, 19 based on Nd-ion doped active media, wherein at least one of said solid-state amplifiers 18, 19 is regenerative and, preferably, chirped pulse amplification is accomplished. Pulse energy is raised by 6 to 9 orders of magnitude in a sequence of said amplifiers 18, 19. Due to the narrow band of Nd-doped active media and distinct properties of regenerative amplifiers the amplified pulse is from 10ps to 100ps in duration (at a particular case, 5ps may be attained).

Further, frequency doubling is performed in a second-harmonic generation crystal 20. The generated second-harmonic radiation 21 is splitted into two parts with the help of a power splitter 22. A first part of said radiation with pulse energy in the range of a few millijoules (according to an alternative configuration, a few hundred millijoules) through supplementary optical components (deflecting optics and a delay line 23) is directed into the first OPA crystal 3 as a pulse of pump radiation 7. The other part 8 of said second-harmonic radiation with energy of pulses within the range of tens of millijoules is destined to pump the third stage of optical parametric amplification.

In the first OPA crystal 3, the pulses of seed 9 and pump 7 radiation are overlapped in time and space satisfying conditions of non-collinear phase matching. A good coincidence between durations of seed and pump pulses and their accurate temporal overlapping is not crucial in the first OPA stage. It is mainly important to amplify such a portion of a spectrum, chirp profile and bandwidth of which allow for pulse compression down to (100÷200)fs. With a few-hundred-millijoules pulse of pump radiation 7, it is possible to achieve (10÷100)µJ energy pulses of amplified signal wave radiation 24. Alternatively, with (1÷5)mJ pumping, energy of said pulses of amplified signal wave radiation 24 attains (50÷300)uJ. This energy is sufficient or even excessive for white light generation in the crystalline white light generator 6, for example, sapphire plate.

The first stage of optical parametric amplification ends up with compression of said pulses of amplified signal wave radiation 24 in a pulse compressor 25. A bandwidth is sufficient and a form of chirp profile allows for compression down to (100÷200)fs with a pair of prisms or gratings selected as said pulse compressor 25. Also, a volume Bragg grating may be selected. Energy of a compressed pulses of radiation 26 at an output of said compressor 25 is in the range from a few up to a few hundred millijoules, while a central wavelength λ₁ is approximately equal to the initial wavelength λ₀ of the primary laser source 1 radiation 11.

It is worth mentioning that the first stage of optical parametric amplification in the system of this invention is close but not the same as a traditional scheme known as NOPA, wherein radiation with an initial wavelength, e.g. 1064nm, is parametrically amplified with its second-harmonic, i.e. 532nm radiation. BBO nonlinear crystal is highly suitable for these wavelengths and features a broad parametric amplification band of up to 300 nanometers. Schemes without and with pump pulse amplifiers are known. In the traditional NOPA scheme 1064nm radiation propagates through a WL generator to form a broadband seed radiation giving a freedom for wavelength tuning or a possibility to obtain sub-100fs pulses. The first OPA stage in the system of this invention differs from said traditional NOPA scheme in these aspects: 1) the spectral bandwidth Δλ₁ of the formed seed radiation 9 is relatively small, significantly smaller than parametric amplification band of the OPA crystal 3; 2) formation of said spectral bandwidth Δλ₁ of about (10÷20)nm does not require high energy of radiation 13 from which said seed radiation 9 is formed; 3) the pulses of the seed radiation 9 are chirped, wherein dephasing among spectral components arises automatically during spectral broadening in said radiation conditioning system 15 or, alternatively, is introduced deliberately, while the chirp profile is such that pulses are compressible with a prism-pair or grating-pair compressor down to (100÷500)fs or (100÷200)fs.

To summarize, the first optical parametric amplification stage in the system of this invention is preparation of radiation 26 required for white light generation in a crystalline bulk material. The main advantage of this stage is that the pulses of the seed radiation 9 are generated in a sequence of all-fiber optical components based on standard single-mode optical fibers.

Further, a second stage of optical parametric amplification takes place. White light radiation 27 which is used to form a seed radiation 28 for the second OPA stage is generated from only a small part of said radiation 26. A power splitter 29 is used to separate a part 30 not exceeding 5% in energy. Therefore, energy of said part 30 of radiation (with pulses lasting (100÷500)fs or (100÷200)fs in time) is in the range from 0.5µJ to 4µJ. This radiation is focused inside a white light generation crystal 6, which preferably is YAG or a sapphire plate, where additional spectral components are generated as a consequence of several simultaneous nonlinear processes. Other known white light generating crystals may be employed as well. A few-hundred nanometers bandwidth of the generated radiation 27 corresponds to a sub-5fs duration of a transform-limited pulse, but dephasing of spectral components results in pulse duration in the range from 100fs to 1ps. Pulses of said radiation 27 have energy of about 10nJ.

The major part 31 of the radiation 26 separated by said power splitter 29 is used for formation of pump radiation 10 for the second OPA stage. Frequency doubling of this part 31 of radiation having a central wavelength nearly the same as said initial wavelength λ₀ is performed in a second-harmonic generation crystal 32. For example, in a system of this invention designed to have Nd:YAG-based amplifier 2, the initial wavelength λ₀ is 1064nm, and the generated second-harmonic radiation is 532nm. This radiation through supplementary optical components is directed into the second OPA crystal 4 as pump radiation 10.

In the second OPA crystal 4, said pulses of seed 28 and pump 10 radiation are overlapped in time and space satisfying conditions of non-collinear phase matching. Accurate temporal overlapping of pulses of said radiations 28, 10 is very important at this stage. This influences duration of output pulse of the whole OPCPA system, and even its central wavelength. Therefore, additional optical components such as pulse stretchers and/or compressors 33, 34 and a variable-delay line 35 may be present on the path of pulses of seed 28 and/or pump 10 radiation. A ratio of pump and seed pulse durations and their temporal coincidence determines which spectral components of radiation 28 that is amplified in the crystal 4 experience highest parametric gain. Since both pulses of seed 28 and pump 10 radiation are of comparable durations in the range of femtoseconds, any changes in their durations and mutual overlapping have a significant impact.

According to one particular embodiment of this invention, said additional optical element 33 is absent on a path of pulses of seed radiation 28, while pulses of pump radiation 10 propagate through a pulse stretcher 34. Pulses having a bandwidth of (10÷20)nm are easily stretchable with ordinary dispersive pulse stretchers. In this embodiment duration of pump pulses are increased to match or slightly to exceed a duration of seed pulses.

According to an alternative particular embodiment of the present invention, said additional optical element 34 is absent on a path of pulses of pump radiation 10, while pulses of seed radiation 28 propagate through a pulse compressor 33. Since pulses of seed radiation 28 are strongly chirped they may be compressed by reducing dephasing of spectral components. Seed pulse duration of 10fs may be achieved with an ordinary prism-pair or grating-pair compressor (longer than a transform-limited duration). It is not necessary to completely cancel high-order dispersion originating at white light generation, and therefore, to achieve a transform-limited pulse duration, since parametric amplification is reasonable only if pump-to-seed pulse duration ratio is less than 10. Moreover, possibility of optical damage is reduced when operating with stretched pulses.

According to other variations of the present invention, yet different combinations of elements 33, 34 are possible: 1) pulses of seed radiation 28 as well as pulses of pump radiation 10 are stretched in time; 2) pulses of seed radiation 28 are compressed, while pulses of pump radiation 10 are stretched. In the latter configuration, chirped pulses of initial signal wave (seed) are parametrically amplified with chirped pump pulses, therefore, conditions for amplification of different spectral components depend on chirp profiles and mutual temporal shift of said pulses. As a result, a central wavelength λ₂ of amplified signal radiation 36, may be tuned by changing a length of a delay line 35.

By selecting an optimal overlapping of pulses of seed 28 and pump 10 radiation, all spectral components of the generated white light radiation that fall within a non-collinear parametric amplification band of the OPA crystal 4 may be amplified. The BBO crystal is particularly suitable for parametric amplification of radiation at 1064nm, when pumped with 532nm, because has a non-collinear optical parametric amplification bandwidth of 300nm. That means that the spectral width of the amplified signal wave radiation 36 would correspond to a duration of a transform-limited pulse of less than 10fs.

In case the pulses of seed 28 and pump 10 radiation are not optimally overlapped in time, not all of spectral components that fall within the crystal's 4 amplification band are parametrically amplified and a resultant spectral width of the amplified signal wave radiation 36 corresponds to (10÷100)fs duration of a transform-limited pulse.

In the laser source of this invention according to Fig.3, wherein three OPA stages are present, pulses of signal wave radiation 36 amplified in the second OPA crystal 4 are not compressed before a subsequent optical parametric amplification stage. Radiation 36 is chirped, and hence pulses have a longer duration, in the range from 100fs up to 1ps or even longer, than their transform-limited duration. Energy spans from 1µJ to 10µJ.

The third stage of optical parametric amplification is similar to a traditional optical parametric chirped pulse amplification scheme. Seed radiation 37 for the third OPA stage is formed from signal wave radiation 36 amplified in the second OPA crystal 4 by stretching pulses in time in a pulse stretcher 38. An aim is to form seed pulses which have a duration comparable with duration of pulses of pump radiation 8. As said before, for an efficient parametric amplification pump pulses must not be longer than by 10 times than seed pulses. In the most optimal configuration of this invention a pump-to-seed pulse duration ratio is in (1÷2) range. In this case and overlapping pulses in time (with the help of a delay line 39) in such a way that seed pulse is straight under a peak of pump pulse envelope, all spectral components of signal wave experience equal parametric gain. That means that a central wavelength of the amplified signal wave radiation 40 coincides with the central wavelength of the seed radiation 37. Other spectral characteristics are also preserved - a ratio between spectral amplitudes and also chirp profile. In the third OPA crystal 5, pulses of seed 37 and pump 8 radiation are overlapped in time and space also satisfying conditions of non-collinear phase matching.

With pulses of pump radiation 8 carrying a few tens of millijoules, for example 50mJ, of energy, pulses of signal wave radiation 40 amplified in the third nonlinear crystal 5 may be from 2 to 20 millijoules in energy. This radiation 40 is directed into a pulse compressor 41 where femtosecond output pulses 42 are formed.

Output characteristics of the whole system strongly depend on the selected pulse stretcher 38 and pulse compressor 41, also on spectral bandwidth of radiation 36. To summarize, output pulses 42 with: energy of ∼1mJ and sub-30fs duration or, alternatively, energy of ∼1mJ and tunable duration in the range from 30fs to 100fs and tunable wavelength in (650÷1000)nm range may be obtained in the configuration of the OPCPA system consisting of three parametric amplification stages. If in the second OPA stage pump and seed pulse durations have a ratio and temporal overlapping ensuring efficient amplification of all spectral components that fall within a broad (∼300nm) amplification band of the nonlinear crystal 4, and where sophisticated pulse stretching and compressing elements 38, 41 capable to compensate high-order dispersion of chirped pulses, output pulses 42 of sub-10fs or even 5fs in duration and (1÷5)mJ in energy with central wavelength at about 800nm may be obtained. A good example of said sophisticated pulse stretching element is an acousto-optic pulse stretcher which by which a desired shape of chirp profile may be formed. It is possible to change a chirp appearing at white light radiation generation and to form a desired shape of chirp profile which is compressible with a pulse compressor 41 which may be a glass cube. To attain ∼30fs durations of output pulses 42, simple 2-grating or 4-grating stretchers and compressors are suitable to be used as the stretcher 38 and compressor 41. For ∼20fs pulse durations to achieve, a proper choice are stretchers and compressors which are a combination of gratings and lenses.

Said quantum amplifier 2 for the system having three stages of optical parametric amplification, preferably is a sequence of Nd:YAG, Nd:YVO₄, Nd:YLF or other Nd-based solid-state amplifiers, wherein at least one of said amplifiers is regenerative. Radiation 14 of the seed arm is amplified up to (100µJ÷100mJ) of energy.

According to an alternative embodiment of this invention, the laser source generating femtosecond light pulses consists of just two stages of optical parametric amplification. Its optical scheme differs from the one shown in Fig.3 in that it does not have elements 22, 38, 39 and 5. Also, a less powerful quantum amplifier 2 is needed. With a quantum amplifier 2 producing 1mJ pump pulses, output pulses 42 of 10µJ in energy and with durations from 5fs to 30fs may be obtained.

Symbol ÷ (obelus) in the description and claims of this application is used to denote a range of values. i.e. record (10 ÷ 20)nm is equivalent to the statement "from 10 nm to 20nm" .

All the given illustrations are possible but not limiting realizations of the present invention. Accordingly, the scope of protection is disclosed in the appended claims.

## Claims

1. Method for generation of femtosecond light pulses, comprising at least two optical parametric amplification (OPA) stages, wherein
parametric amplification in a first OPA stage is performed by directing optically synchronized pulses of first seed radiation (9) and first pump radiation (7) into a first nonlinear crystal (3) in which they overlap in time and space, satisfying conditions of non-collinear phase matching,
parametric amplification in a second OPA stage is performed by directing optically synchronized pulses of second seed radiation (28) and second pump radiation (10) into a second nonlinear crystal (4) in which they overlap in time and space satisfying conditions of non-collinear phase matching,
outgoing pulses of signal wave radiation amplified in a final OPA stage, which is at least the second OPA stage, are compressed down to femtosecond output pulses, wherein
said first and second seed radiations (9, 28) and first and second pump radiations (7, 10) are originated from a single primary laser source (1) by splitting ultrashort radiation (11) of said primary laser source (1) with a power splitter (12) into radiation (13) of a seed arm and radiation (14) of a pump arm,
the first seed radiation (9) for said first OPA stage is formed by stretching in time pulses of said radiation (13) of the seed arm, while
the first pump radiation (7) for said first OPA stage is formed by amplifying and frequency doubling of said radiation (14) of the pump arm in a second-harmonic generator (20),
the second seed radiation (28) for said second OPA stage is formed by compressing pulses in time of signal wave radiation (24) amplified in said first nonlinear crystal (3) to form femtosecond pulse radiation (26) and further by spectral broadening of a part (30) of said femtosecond pulse radiation (26) in a white light generator (6) to create spectrally broadened radiation (27) with a bandwidth not less than 300nm and directing into the second nonlinear crystal (4) directly or via a first pulse conditioner (33), wherein
said primary laser source (1) is a low-energy laser source of ultrashort radiation,
***characterized in that***
a central wavelength λ₀ of said ultrashort radiation (11) of the primary laser source (1) is selected to overlap a stimulated emission peak of a solid-state high-gain active medium, and its spectral width Δλ₀ corresponds to a transform-limited pulse duration from 1ps to 3ps,
formation of said first seed radiation (9) from said radiation (13) of the seed arm additionally comprises broadening of its spectrum up to (10÷20)nm of bandwidth,
a spectral bandwidth of said radiation (14) of the pump arm, which is amplified during formation of said first pump radiation (7), does not exceed 1nm,
the second pump radiation (10), in order to create pulse duration in the range of femtoseconds, is formed from amplified in said first OPA stage and compressed to femtosecond pulse radiation (26) by separating its part (31) by a power splitter (29) and directing into a second-harmonic generator (32) for frequency doubling, the frequency doubled radiation is directed into the second nonlinear crystal (4) directly or via a second pulse conditioner (34), wherein
ratio of durations of pump and seed pulses is in a range from 1 to 10, which is achieved by said first and/or second pulse conditioners (33, 34) comprising pulse compressors and/or pulse stretchers;
signal wave pulses, amplified in the final at least in the second nonlinear crystal (4), are compressed in time to form output pulses with duration of 5fs to 100fs.

2. Method according to claim 1, ***characterized in that***
a third OPA stage is provided, wherein parametric amplification in a third OPA stage is performed by directing optically synchronized pulses of third seed radiation (37) and third pump radiation (8) into a third nonlinear crystal (5), in which they overlap in time and space satisfying conditions of non-collinear phase matching, wherein
the third seed radiation (37) for said third OPA stage is formed from signal wave radiation (36) amplified in said second nonlinear crystal (4) by compressing its pulses in time, while
the third pump radiation (8) is formed in the same way as the pump radiation (7) for the first OPA stage;
signal wave pulses, amplified in the final third nonlinear crystal (5), are compressed in time to form output pulses (42) with duration of 5fs to 100fs.

3. Method according claims 1-2, ***characterized in that***
a central wavelength of said ultrashort radiation (11) of the primary laser source (1) is selected from a luminescence band of Yb-doped active media in such a way that it overlaps stimulated emission peak of Nd-doped active medium, and a central wavelength of the femtosecond output pulses is about 800nm.

4. Method according to claim 3, ***characterized in that***
a central wavelength of said ultrashort radiation (11) of the primary laser source (1) is 1064nm.

5. Laser source for generation of femtosecond light pulses,
comprising a low energy primary laser source (1) of ultrashort radiation (11) and at least two optical parametric amplification (OPA) stages comprising correspondingly a first nonlinear crystal (3) and a second nonlinear crystal (4), wherein
said ultrashort radiation (11) of the primary laser source (1) is split by a power splitter (12) into radiation (13) of a seed arm and into radiation (14) of a pump arm,
a radiation conditioning system (15) is placed in said seed arm for stretching pulses of said radiation (13) and directing the stretched pulses into the first nonlinear crystal (3) as a first seed radiation (9),
a quantum amplifier (2) and a second-harmonic generator (20) are placed in said pump arm to generate a frequency doubled radiation (21) as a first pump radiation (7), said frequency doubled radiation (21) is directed into the first nonlinear crystal (3) via optical elements (23) in such a way that pulses of the first seed radiation (9) and the first pump radiation (7) overlap in time and space satisfying conditions of non-collinear phase matching,
a pulse compressor (25) is placed on a path of signal wave radiation (24) amplified in the first nonlinear crystal (3) to form femtosecond pulse radiation (26), further on the radiation part (30) of the femtosecond pulse radiation (26) a white light generator (6) is placed to form spectrally broadened radiation (27) with a bandwidth of at least 300nm, which is directed via a first pulse conditioner (33) or directly into the second nonlinear crystal (4) as a second seed radiation (28),
a second pump radiation (10) is formed by a pulse formation means, which comprises optical elements (35), to direct the second pump radiation (10) into the second nonlinear crystal (4) in such a way that pulses of the second seed radiation (28) and the second pump radiation (10) in the nonlinear crystal (4) overlap in time and space satisfying conditions of non-collinear phase matching;
signal wave radiation amplified in a final nonlinear crystal which is at least the second nonlinear crystal (4) propagates through a pulse compressor (41) designed to form femtosecond output pulses,
***characterized in that***
said primary laser source (1) is designed to generate radiation (11) of picosecond pulses with duration from 1ps to 3ps, while its central wavelength λ₀ is selected to overlap a stimulated emission peak of a solid-state high-gain active medium,
said radiation conditioning system (15) placed in the seed arm (13) is designed to broaden radiation spectrum up to a bandwidth of (10÷20)nm,
said quantum amplifier (2) is a narrowband amplifier with a gain bandwidth less than 1nm,
the pulse formation means adapted to form the second pump radiation (10) comprises a second-harmonic generation crystal (32) placed on a path of the radiation part (31) separated by a power splitter (29) from the femtosecond pulse radiation (26) in order to form a frequency doubled radiation which is directed to the second nonlinear crystal (4) directly or via a second pulse conditioner (34), wherein
said first and/or second pulse conditioners (33, 34) comprising pulse compressors and/or pulse stretchers are used to form a ratio of durations of pump and seed pulses from 1 to 10,
signal wave radiation amplified in the last nonlinear crystal which is at least the second nonlinear crystal (4) is directed into a pulse compressor (41) designed to form femtosecond output pulses with duration from 5fs to 100fs.

6. Laser source according to claim 5, ***characterized in that***
said quantum amplifier (2) comprises one or more Nd-doped solid-state laser amplifiers, wherein at least one of said Nd-doped solid-state amplifiers is regenerative amplifier,
resulting in an energy of pulses at the output of said quantum amplifier (2) within a range between 100µJ and 1mJ,
while energy of the femtosecond output pulses generated in the last OPA stage is from 1µJ to 10µJ.

7. Laser source according to claim 5, ***characterized in that***
a third nonlinear crystal (5) is provided making a basis of a third OPA stage, wherein
a third seed radiation (37) is formed by pulse stretching in a stretcher (38) of a signal wave radiation (36) amplified in the second nonlinear crystal (4),
a third pump radiation (8) is formed by separating a part of the frequency doubled radiation (21) at the output of the second-harmonic generator (20) with a power splitter (22); said separated part of the frequency doubled radiation (21) is directed into the third nonlinear crystal (5) via optical elements (39) in such a way that pulses of the third seed radiation (37) and the third pump radiation (8) overlap in time and space satisfying conditions of non-collinear phase matching,
signal wave radiation amplified in the third nonlinear crystal (5) is directed into a pulse compressor (41) designed to form femtosecond output pulses with duration from 5fs to 100fs.

8. Laser source according to claim 7, ***characterized in that***
said quantum amplifier (2) comprises one or more Nd-doped solid-state laser amplifiers, wherein at least one of said Nd-doped solid-state laser amplifiers is regenerative amplifier,
resulting in an energy of pulses at the output of said quantum amplifier (2) within a range between 100µJ and 100mJ,
while energy of the femtosecond output pulses (42) generated in the last OPA stage is from 10µJ to 10mJ.

9. Laser source according to any one of claims 5-8, ***characterized in that***
said primary laser source (1) of ultrashort radiation is Yb-based laser designed to irradiate a spectral line overlapping an emission peak of Nd-doped active media.

10. Laser source according to claim 9, ***characterized in that***
said Yb-based laser is a fiber laser based on Yb-doped single-mode optical fiber, while the quantum amplifier (2) is based on Nd:YAG, Nd:YVO₄ or Nd:YLF active medium.

11. Laser source according to any one of claims 5-10, ***characterized in that***
energy of said ultrashort radiation (11) of the primary laser source (1) does not exceed 100pJ and said radiation conditioning system (15) comprises a preamplifier (16), destined to increase energy of pulses in radiation (11) up to (1÷10)nJ, also an additional optical element (17) in which self-phase modulation of pulses occurs.

12. Laser source according to any one of claims 5-10, ***characterized in that***
energy of said ultrashort radiation (11) of the primary laser source (1) is in the (1÷10)nJ range.

13. Laser source according to any one of claims 5-12, ***characterized in that***
said radiation conditioning system (15) is based on single-mode optical fibers.

14. Laser source according to any one of claims 5-13, ***characterized in that***
said white light generator (6) is a plate of sapphire or YAG.

15. Laser source according to any one of claims 5-14, ***characterized in that***
pulse duration of radiation (26) obtained at the output of said pulse compressor (25), placed downstream to the first nonlinear crystal (3), is within a range from 100fs to 200fs.

## Patentansprüche

1. Verfahren zur Erzeugung von Femtosekunden-Lichtimpulsen mit mindestens zwei optischen parametrischen Verstärkungsstufen (OPA-Stufen), wobei
die parametrische Verstärkung in einer ersten OPA-Stufe in der Weise erfolgt, dass optisch synchronisierte Impulse einer ersten Keimstrahlung (9) und einer ersten Pumpenstrahlung (7) in einen ersten nichtlinearen Kristall (3) geleitet werden, in dem sie sich zeitlich und räumlich überlappen und Bedingungen einer nicht kollinearen Phasenanpassung erfüllt werden,
die parametrische Verstärkung in einer zweiten OPA-Stufe so erfolgt, dass optisch synchronisierte Impulse einer zweiten Keimstrahlung (28) und einer zweiten Pumpenstrahlung (10) in einen zweiten nichtlinearen Kristall (4) geleitet werden, in dem sie sich zeitlich und räumlich überlappen und Bedingungen einer nicht kollinearen Phasenanpassung erfüllt werden,
abgehende Impulse einer in einer letzten OPA-Stufe, bei der es sich mindestens um die zweite OPA-Stufe handelt, verstärkten Signalwellenstrahlung zu Femtosekunden-Ausgangsimpulsen komprimiert werden, wobei
die ersten und zweiten Keimstrahlungen (9, 28) und die ersten und zweiten Pumpenstrahlungen (7, 10) von einer einzelnen primären Laserquelle (1) stammen, indem Ultrakurzstrahlung (11) von der primären Laserquelle (1) mit einem Leistungssplitter (12) in Strahlung (13) eines Keimzweigs und Strahlung (14) eines Pumpenzweigs gespalten wird,
die erste Keimstrahlung (9) der ersten OPA-Stufe durch zeitliche Streckung von Impulsen der Strahlung (13) des Keimzweigs gebildet wird, während
die erste Pumpenstrahlung (7) für die erste OPA-Stufe durch Verstärkung und Frequenzverdoppelung der Strahlung (14) des Pumpenzweigs in einem Zweite-Harmonische-Generator (20) entsteht,
die zweite Keimstrahlung (28) für die zweite OPA-Stufe dadurch gebildet wird, dass zur Bildung von Femtosekundenimpulsstrahlung (26) im ersten nichtlinearen Kristall (3) verstärkte Impulse der Signalwellenstrahlung (24) zeitlich komprimiert werden, und darüber hinaus durch spektrale Erweiterung eines Teils (30) der Femtosesekundenimpulsstrahlung (26) in einem Weißlichtgenerator (6) eine spektral erweiterte Strahlung (27) mit einer Bandbreite von mindestens 300 nm geschaffen und direkt oder über einen ersten Impulskonditionierer (33) in den zweiten nichtlinearen Kristall (4) geleitet wird, wobei
die primäre Laserquelle (1) eine Niedrigenergie-Laserquelle mit Ultrakurzstrahlung ist,
**dadurch gekennzeichnet, dass**
eine mittlere Wellenlänge λ₀ der Ulltrakurzstrahlung (11) der primären Laserquelle (1) gewählt wird, um eine stimulierte Emissionsspitze eines mit hoher Verstärkung aktiven Festkörpermediums zu überlappen und ihre Spektralbreite Δλ₀ einer transformationsbegrenzten Impulsdauer von 1 ps bis 3 ps entspricht,
zur Bildung der ersten Keimstrahlung (9) aus der Strahlung (13) des Keimzweigs zusätzlich die Erweiterung ihres Spektrums auf bis zu (10 ÷ 20) nm Bandbreite gehört,
eine spektrale Bandbreite der Strahlung (14) des Pumpenzweigs, die während der Bildung der ersten Pumpenstrahlung (7) verstärkt wird, nicht über 1 nm hinausgeht,
die zweite Pumpenstrahlung (10) zur Erzielung einer Impulsdauer im Bereich von Femtosekunden in der ersten OPA-Stufe verstärkt und zu Femtosekundenimpulsstrahlung (26) komprimiert wird, indem ihr Teil (31) durch einen Leistungssplitter (29) abgetrennt und zur Frequenzverdoppelung in einen Zweite-Harmonische-Generator (32) geleitet wird, wobei die frequenzverdoppelte Strahlung direkt oder über einen zweiten Impulskonditionierer (34) in den zweiten nichtlinearen Kristall (4) geleitet wird, wobei
das Verhältnis der Dauern von Pumpen- und Keimimpulsen in einem Bereich von 1 zu 10 liegt, was durch die ersten und/oder zweiten Impulskonditionierer (33, 34) mit Impulskompressoren und/oder Impulsstreckeren erreicht wird;
die im letzten und mindestens zweiten nichtlinearen Kristall (4) verstärkten Signalwellenimpulse zur Bildung von Ausgangsimpulsen mit einer Dauer von 5 fs bis 100 fs zeitlich komprimiert werden.

2. Verfahren nach Anspruch 1, **dadurch gekennzeichnet, dass**
eine dritte OPA-Stufe vorgesehen ist, wobei die parametrische Verstärkung in einer dritten OPA-Stufe in der Weise erfolgt, dass optisch synchronisierte Impulse einer dritten Keimstrahlung (37) und einer dritten Pumpenstrahlung (8) in einen dritten nichtlinearen Kristall (5) geleitet werden, in dem sie sich zeitlich und räumlich überlappen und Bedingungen einer nicht kollinearen Phasenanpassung erfüllt werden, wobei
die dritte Keimstrahlung (37) für die dritte OPA-Stufe aus durch zeitliche Komprimierung ihrer Impulse im zweiten nichtlinearen Kristall (4) verstärkte Signalwellenstrahlung (36) gebildet wird, während
die dritte Pumpenstrahlung (8) in der gleichen Weise wie die Pumpenstrahlung (7) für die erste OPA-Stufe entsteht;
im letzten dritten nichtlinearen Kristall (5) verstärkte Signalwellenimpulse zeitlich komprimiert werden, um Ausgangsimpulse (42) mit einer Dauer von 5 fs bis 100 fs zu bilden.

3. Verfahren nach den Ansprüchen 1 und 2, **dadurch gekennzeichnet, dass**
eine mittlere Wellenlänge der Ultrakurzstrahlung (11) der primären Laserquelle (1) aus einem Lumineszenzband Yb-dotierter aktiver Medien auf eine solche Weise ausgewählt wird, dass sie die stimulierte Emissionsspitze eines Nd-dotierten aktiven Mediums überlappt und eine mittlere Wellenlänge der Femtosekunden-Ausgangsimpulse bei etwa 800 nm liegt.

4. Verfahren nach Anspruch 3, **dadurch gekennzeichnet, dass**
eine mittlere Wellenlänge der Ultrakurzstrahlung (11) der primären Laserquelle (1) 1064 nm beträgt.

5. Laserquelle zur Erzeugung von Femtosekunden-Lichtimpulsen,
mit einer primären Niedrigenergie-Laserquelle (1) mit Ultrakurzstrahlung (11) und mindestens zwei optischen parametrischen Verstärkungsstufen (OPA-Stufen) mit einem entsprechenden ersten nichtlinearen Kristall (3) und einem zweiten nichtlinearen Kristall (4), wobei
die Ultrakurzstrahlung (11) der primären Laserquelle (1) durch einen Leistungssplitter (12) in Strahlung (13) eines Keimzweiges und in Strahlung (14) eines Pumpenzweiges gespalten wird,
ein Strahlungskonditionierungssystem (15) im Keimzweig angeordnet ist, um Impulse der Strahlung (13) zu strecken und die gestreckten Impulse als eine erste Keimstrahlung (9) in den ersten nichtlinearen Kristall (3) zu leiten,
ein Quantenverstärker (2) und ein Zweite-Harmonische-Generator (20) im Pumpenzweig angeordnet sind, um als eine erste Pumpenstrahlung (7) eine Strahlung (21) mit verdoppelter Frequenz zu erzeugen, wobei die Strahlung (21) mit verdoppelter Frequenz über optische Elemente (23) so in den ersten nichtlinearen Kristall (3) geleitet wird, dass Impulse der ersten Keimstrahlung (9) und der ersten Pumpenstrahlung (7) sich zeitlich und räumlich überlappen und Bedingungen einer nicht kollinearen Phasenanpassung erfüllen,
ein Impulskompressor (25) auf einem Weg der im ersten nichtlinearen Kristall (3) verstärkten Signalwellenstrahlung (24) angeordnet ist, um Femtosekundenimpulsstrahlung zu bilden, wobei des Weiteren auf dem Strahlungsteil (30) der Femtosekundenimpulsstrahlung (26) ein Weißlichtgenerator (6) angeordnet ist, um spektral erweiterte Strahlung (27) mit einer Bandbreite von mindestens 300 nm zu erzeugen, die als zweite Keimstrahlung (28) über einen ersten Impulskonditionierer (33) oder direkt in den zweiten nichtlinearen Kristall (4) geleitet wird,
eine zweite Pumpenstrahlung (10) durch eine Impulsformvorrichtung mit optischen Elementen (35) gebildet wird, um die zweite Pumpenstrahlung (10) so in den zweiten nichtlinearen Kristall (4) zu leiten, dass Impulse der zweiten Keimstrahlung (28) und der zweiten Pumpenstrahlung (10) im nichtlinearen Kristall (4) sich zeitlich und räumlich überlappen und Bedingungen einer nicht kollinearen Phasenanpassung erfüllen;
in einem letzten nichtlinearen Kristall, bei dem es sich mindestens um den zweiten nichtlinearen Kristall (4) handelt, verstärkte Signalwellenstrahlung zur Bildung von Femtosekunden-Ausgangsimpulsen durch einen Impulskompressor (41) geht,
**dadurch gekennzeichnet, dass**
die primäre Laserquelle (1) so konstruiert ist, dass eine Strahlung (11) aus Picosekundenimpulsen mit einer Dauer von 1 ps bis 3 ps erzeugt wird, während ihre mittlere Wellenlänge λ₀ so gewählt wird, dass eine stimulierte Emissionsspitze eines aktiven Festkörpermediums mit hoher Verstärkung überlappt wird,
das im Keimzweig (13) angeordnete Strahlungskonditionierungssystem (15) so konstruiert ist, dass das Strahlungsspektrum bis zu einer Bandbreite von (10 ÷ 20) nm erweitert wird,
es sich bei dem Quantenverstärker (2) um einen Schmalbandverstärker mit einer Verstärkungsbandbreite von weniger als 1 nm handelt,
die zur Bildung der zweiten Pumpenstrahlung (10) vorgesehene Impulsformungsvorrichtung einen Zweite-Harmonische-Generator (32) umfasst, der auf einem Weg des durch einen Leistungssplitter (29) von der Femtosesekundenimpulsstrahlung (26) getrennten Strahlungsteils (31) angeordnet ist, um eine frequenzverdoppelte Strahlung zu bilden, die direkt oder über einen zweiten Impulskonditionierer (34) zum zweiten nichtlinearen Kristall (4) geleitet wird, wobei
die ersten und/oder zweiten Impulskonditionierer (33, 34), zu denen Impulskompressoren und/oder Impulsstreckeren gehören, benutzt werden, um ein Verhältnis zwischen Pumpen- und Keimimpulsdauer von 1 zu 10 zu erhalten,
im letzten nichtlinearen Kristall, bei dem es sich mindestens um den zweiten nichtlinearen Kristall (4) handelt, verstärkte Signalwellenstrahlung zur Bildung von Femtosekunden-Ausgangsimpulsen mit einer Dauer von 5 fs bis 100 fs in einen Impulskompressor (41) geleitet wird.

6. *Laserquelle nach Anspruch 5,* **dadurch gekennzeichnet, dass**
der Quantenverstärker (2) einen oder mehrere Nd-dotierte Festkörperlaserverstärker umfasst, wobei mindestens einer der Nd-dotierten Festkörperverstärker ein regenerativer Verstärker ist,
was am Ausgang des Quantenverstärkers (2) zu einer Impulsenergie innerhalb eines Bereiches zwischen 100 µJ und 1 mJ führt,
während die Energie der in der letzten OPA-Stufe erzeugten Femtosekunden-Ausgangsimpulse im Bereich von 1 µJ bis 10 µJ liegt.

7. Laserquelle nach Anspruch 5, **dadurch gekennzeichnet, dass**
als Basis für eine dritte OPA-Stufe ein dritter nichtlinearer Kristall (5) vorgesehen ist, wobei
durch Streckung von Impulsen einer im zweiten nichtlinearen Kristall (4) verstärkten Signalwellenstrahlung (36) in einer Impulsstrecker (38) eine dritte Keimstrahlung (37) gebildet wird,
durch Abtrennung eines Teils der frequenzverdoppelten Strahlung (21) am Ausgang des Zweite-Harmonische-Generator (20) mit einem Leistungssplitter (22) eine dritte Pumpenstrahlung (8) gebildet wird, wobei der abgetrennte Teil der frequenzverdoppelten Strahlung (21) über optische Elemente (39) so in den dritten nichtlinearen Kristall (5) geleitet wird, dass sich Impulse der dritten Keimstrahlung (37) und der dritten Pumpenstrahlung (8) zeitlich und räumlich überlappen und Bedingungen einer nicht kollinearen Phasenanpassung erfüllt werden,
die im dritten nichtlinearen Kristall (5) verstärkte Signalwellenstrahlung zur Formung von Femtosekunden-Ausgangsimpulsen mit einer Dauer von 5 fs bis 100 fs in einen Impulskompressor (41) geleitet wird.

8. Laserquelle nach Anspruch 7, **dadurch gekennzeichnet, dass**
der Quantenverstärker (2) einen oder mehrere Nd-dotierte Festkörperlaserverstärker umfasst, wobei es sich bei mindestens einem der Nd-dotierten Festkörperlaserverstärker um einen regenerativen Verstärker handelt,
so dass sich am Ausgang des Quantenverstärkers (2) eine Impulsenergie in einem Bereich zwischen 100 µJ und 100 mJ ergibt,
während die Energie der in der letzten OPA-Stufe erzeugten Femtosekunden-Ausgangsimpulse (42) bei 10 µJ bis 10 mJ liegt.

9. Laserquelle nach irgendeinem der Ansprüche 5 bis 8, **dadurch gekennzeichnet, dass**
es sich bei der primären Laserquelle (1) mit Ultrakurzstrahlung um einen Yb-basierten Laser handelt, der so konstruiert ist, dass eine eine Emissionsspitze von Nd-dotierten aktiven Materialien überlappende Spektrallinie bestrahlt wird.

10. Laserquelle nach Anspruch 9, **dadurch gekennzeichnet, dass**
es sich bei dem Yb-basierten Laser um einen Faserlaser auf der Basis von Yb-dotierten einmodigen Glasfasern handelt, während als Basis für den Quantenverstärker (2) ein aktives Nd:YAG, Nd:YVO₄ oder Nd:YLF Medium dient.

11. Laserquelle nach irgendeinem der Ansprüche 5 bis 10, **dadurch gekennzeichnet, dass**
die Energie der Ultrakurzstrahlung (11) der primären Laserquelle (1) nicht über 100 pJ hinausgeht und dass das Strahlungskonditionierungssystem (15) einen Vorverstärker (16) umfasst, um die Impulsenergie der Strahlung (11) auf bis zu (1 ÷ 10) nJ zu erhöhen, und außerdem ein zusätzliches optisches Element (17) aufweist, in dem die Eigenphasenmodulation von Impulsen stattfindet.

12. Laserquelle nach irgendeinem der Ansprüche 5 bis 10, **dadurch gekennzeichnet, dass**
die Energie der Ultrakurzstrahlung (11) der primären Laserquelle (1) im Bereich von (1 ÷ 10) nJ liegt.

13. Laserquelle nach irgendeinem der Ansprüche 5 bis 12, **dadurch gekennzeichnet, dass**
für das Strahlungskonditionierungssystem (15) als Basis einmodige Glasfasern vorgesehen sind.

14. Laserquelle nach irgendeinem der Ansprüche 5 bis 13, **dadurch gekennzeichnet, dass**
es sich beim Weißlichtgenerator (6) um eine Saphir- oder YAG-Platte handelt.

15. Laserquelle nach irgendeinem der Ansprüche 5 bis 14, **dadurch gekennzeichnet, dass**
die Impulsdauer der am Ausgang des unterhalb des ersten nichtlinearen Kristalls (3) gelegenen Impulskompressors (25) erhaltenen Strahlung (26) innerhalb eines Bereichs von 100 fs bis 200 fs liegt.

## Revendications

1. Procédé de génération d'impulsions lumineuses femtosecondes, comprenant au moins deux étages d'amplification paramétrique optique (OPA), dans lequel
l'amplification paramétrique dans un premier étage OPA est effectuée en orientant des impulsions optiquement synchronisées d'un premier rayonnement signal (9) et d'un premier rayonnement de pompage (7) vers un premier cristal non-linéaire (3) dans lequel elles se chevauchent dans le temps et dans l'espace, en satisfaisant des conditions d'adaptation de phase non-colinéaire,
l'amplification paramétrique dans un deuxième étage OPA est effectuée en orientant des impulsions optiquement synchronisées d'un deuxième rayonnement signal (28) et d'un deuxième rayonnement de pompage (10) vers un deuxième cristal non-linéaire (4) dans lequel elles se chevauchent dans le temps et dans l'espace en satisfaisant des conditions d'adaptation de phase non-colinéaire,
les impulsions sortantes d'un rayonnement d'onde de signal amplifié dans un étage OPA final, qui est au moins le deuxième étage OPA, sont compressées en impulsions de sortie femtosecondes, dans lequel
lesdits premier et deuxième rayonnements signaux (9, 28) et lesdits premier et deuxième rayonnements de pompage (7, 10) proviennent d'une seule source laser primaire (1) en séparant le rayonnement ultra-court (11) de ladite source laser primaire (1) avec un séparateur de puissance (12) en un rayonnement (13) d'un bras signal et un rayonnement (14) d'un bras de pompage,
le premier rayonnement signal (9) destiné audit premier étage OPA est formé en étirant les impulsions de temps dudit rayonnement (13) du bras signal, tandis que
le premier rayonnement de pompage (7) destiné audit premier étage OPA est formé en amplifiant et en doublant la fréquence dudit rayonnement (14) du bras de pompage dans un générateur de second harmonique (20),
le deuxième rayonnement signal (28) destiné audit deuxième étage OPA est formé en compressant les impulsions dans le temps du rayonnement d'onde de signal (24) amplifié dans ledit premier cristal non-linéaire (3) afin de former un rayonnement à impulsions femtosecondes (26), et en outre par élargissement spectral d'une partie (30) dudit rayonnement à impulsions femtosecondes (26) dans un générateur de lumière blanche (6) afin de créer un rayonnement spectralement élargi (27) avec une bande passante non inférieure à 300 nm, et en l'orientant vers le deuxième cristal non-linéaire (4) directement ou par le biais d'un premier conditionneur d'impulsions (33), dans lequel
ladite source laser primaire (1) est une source laser à de rayonnement ultra-court à faible énergie,
**caractérisé en ce que**
une longueur d'onde centrale λ₀ dudit rayonnement ultra-court (11) de la source laser primaire (1) est choisie afin de chevaucher un pic d'émission stimulé d'un milieu actif solide à gain élevé, et sa largeur spectrale Δλ₀ correspond à une durée d'impulsion limitée par transformée de 1 ps à 3 ps,
la formation dudit premier rayonnement signal (9) à partir dudit rayonnement (13) du bras signal comprend en outre l'élargissement de son spectre jusqu'à une bande passante de (10÷20) nm,
une bande passante spectrale dudit rayonnement (14) du bras de pompage, qui est amplifié pendant la formation dudit premier rayonnement de pompage (7), ne dépasse pas 1 nm,
le deuxième rayonnement de pompage (10), afin de créer une durée d'impulsions de quelques femtosecondes, est formé après avoir été amplifié dans ledit premier étage OPA et compressé en rayonnement à impulsions femtosecondes (26) en séparant sa partie (31) par un séparateur de puissance (29) et en l'orientant vers un générateur de second harmonique (32) pour le doublage de fréquence, le rayonnement à fréquence doublée est orienté vers le deuxième cristal non-linéaire (4) directement ou par le biais d'un second conditionneur d'impulsions (34), dans lequel
le rapport entre les durées des impulsions de pompage et des impulsions signales est de l'ordre de 1 à 10, qui est obtenu par ledit premier et second conditionneurs d'impulsions (33, 34) comprenant des compresseurs d'impulsions et/ou des étireurs d'impulsions;
les impulsions d'onde de signal, amplifiées à la fin au moins dans le deuxième cristal non-linéaire (4), sont compressées dans le temps afin de former des impulsions de sortie avec une durée de 5 fs à 100 fs.

2. Procédé selon la revendication 1, **caractérisé en ce que**
un troisième étage OPA est prévu, dans lequel une amplification paramétrique dans un troisième étage OPA est effectuée en orientant les impulsions optiquement synchronisées du troisième rayonnement signal (37) et du troisième rayonnement de pompage (8) vers un troisième cristal non-linéaire (5), dans lequel elles se chevauchent dans le temps et dans l'espace en satisfaisant des conditions d'adaptation de phase non-colinéaire, dans lequel
le troisième rayonnement signal (37) destiné audit troisième étage OPA est formé à partir du rayonnement d'onde de signal (36) amplifié dans ledit deuxième cristal non-linéaire (4) en compressant ses impulsions dans le temps, tandis que
le troisième rayonnement de pompage (8) est formé de la même manière que le rayonnement de pompage (7) destiné au premier étage OPA;
les impulsions d'onde de signal, amplifiées dans le troisième cristal non-linéaire final (5), sont compressées dans le temps afin de former des impulsions de sortie (42) avec une durée de 5 fs à 100 fs.

3. Procédé selon les revendications 1 à 2, **caractérisé en ce que**
une longueur d'onde centrale dudit rayonnement ultra-court (11) de la source laser primaire (1) est choisie parmi une bande de luminescence d'un milieu actif dopé au Yb de sorte qu'elle chevauche le pic d'émission stimulé d'un milieu actif dopé au Nd, et une longueur centrale des impulsions de sortie femtosecondes est d'environ 800 nm.

4. Procédé selon la revendication 3, **caractérisé en ce que**
une longueur d'onde centrale dudit rayonnement ultra-court (11) de la source laser primaire (1) est de 1064 nm.

5. Source laser destinée à la génération d'impulsions lumineuses femtosecondes,
comprenant une source laser primaire de rayonnement ultra-court (11) à faible énergie (1) et au moins deux étages d'amplification paramétrique optique (OPA) comprenant en conséquence un premier cristal non-linéaire (3) et un deuxième cristal non-linéaire (4), dans laquelle
ledit rayonnement ultra-court (11) de la source laser primaire (1) est séparé par un séparateur de puissance (12) en un rayonnement (13) d'un bras signal et un rayonnement (14) d'un bras de pompage,
un système de conditionnement de rayonnement (15) est placé dans ledit bras signal afin d'étirer les impulsions dudit rayonnement (13) et d'orienter les impulsions étirées dans le premier cristal non-linéaire (3) comme un premier rayonnement signal (9),
un amplificateur quantique (2) et un générateur de second harmonique (20) sont placés dans ledit bras de pompage afin de générer un rayonnement à fréquence doublée (21) comme premier rayonnement de pompage (7), ledit rayonnement à fréquence doublée (21) est orienté vers le premier cristal non-linéaire (3) par le biais d'éléments optiques (23) de sorte que les impulsions du premier rayonnement signal (9) et du premier rayonnement de pompage (7) se chevauchent dans le temps et dans l'espace en satisfaisant des conditions d'adaptation de phase non-colinéaire,
un compresseur d'impulsions (25) est placé sur un trajet du rayonnement d'onde de signal (24) amplifié dans le premier cristal non-linéaire (3) afin de former un rayonnement à impulsions femtosecondes (26); en outre, sur la partie de rayonnement (30) du rayonnement à impulsions femtosecondes (26), un générateur de lumière blanche (6) est placé afin de former un rayonnement spectralement élargi (27) avec une bande passante d'au moins 300 nm, qui est orienté par le biais d'un premier conditionneur d'impulsions (33) ou directement vers le deuxième cristal non-linéaire (4) comme deuxième rayonnement signal (28),
un deuxième rayonnement de pompage (10) est formé par un moyen de formation d'impulsions, qui comprend des éléments optiques (35), afin d'orienter le deuxième rayonnement de pompage (10) vers le deuxième cristal non-linéaire (4) de sorte que les impulsions du deuxième rayonnement signal (28) et du deuxième rayonnement de pompage (10) dans le cristal non-linéaire (4) se chevauchent dans le temps et dans l'espace en satisfaisant des conditions d'adaptation de phase non-colinéaire;
un rayonnement d'onde de signal amplifié dans un cristal non-linéaire final qui est au moins le deuxième cristal non-linéaire (4) se propage dans un compresseur d'impulsions (41) conçu pour former des impulsions de sortie femtosecondes,
**caractérisé en ce que**
ladite source laser primaire (1) est conçue pour générer un rayonnement (11) d'impulsions picosecondes avec une durée de 1 ps à 3 ps, tandis que sa longueur d'onde centrale λ₀ est choisie afin de chevaucher un pic d'émission stimulé d'un milieu actif solide à gain élevé,
ledit système de conditionnement de rayonnement (15) placé dans le bras signal (13) est conçu pour élargir le spectre de rayonnement jusqu'à une bande passante de (10÷20) nm,
ledit amplificateur quantique (2) est un amplificateur de bande étroite qui présente une bande passante de gain inférieure à 1 nm,
le moyen de formation d'impulsions adapté pour former le deuxième rayonnement de pompage (10) comprend un cristal de génération de second harmonique (32) placé sur un trajet de la partie de rayonnement (31) séparé par un séparateur de puissance (29) du rayonnement femtoseconde (26) afin de former un rayonnement à fréquence doublée qui est orienté vers le deuxième cristal non-linéaire (4) directement ou par le biais d'un second conditionneur d'impulsions (34), dans lequel
lesdits premier et second conditionneurs d'impulsions (33, 34) comprenant des compresseurs d'impulsions et/ou des étireurs d'impulsions sont utilisés pour former un rapport entre les durées des impulsions de pompage et signales compris entre 1 et 10,
le rayonnement d'onde de signal amplifié dans le dernier cristal non-linéaire qui est au moins le deuxième cristal non-linéaire (4) est orienté vers un compresseur d'impulsions (41) conçu pour former des impulsions de sortie femtosecondes avec une durée de 5 fs à 100 fs.

6. Source laser selon la revendication 5, **caractérisée en ce que**
ledit amplificateur quantique (2) comprend un ou plusieurs amplificateurs lasers solides dopés au Nd, dans lequel au moins l'un desdits amplificateurs solides dopés au Nd est un amplificateur régénératif,
afin d'obtenir une énergie d'impulsions à la sortie dudit amplificateur quantique (2) comprise entre 100 µJ et 1 mJ,
tandis que l'énergie des impulsions de sortie femtosecondes générées dans le dernier étage OPA est comprise entre 1 µJ et 10 µJ.

7. Source laser selon la revendication 5, **caractérisée en ce que**
un troisième cristal non-linéaire (5) est prévu et constitue une base d'un troisième étage OPA, dans lequel
un troisième rayonnement signal (37) est formé en étirant des impulsions dans un étireur (38) d'un rayonnement d'onde de signal (36) amplifié dans le deuxième cristal non-linéaire (4),
un troisième rayonnement de pompage (8) est formé en séparant une partie du rayonnement à fréquence doublée (21) au niveau de la sortie du générateur de second harmonique (20) avec un séparateur de puissance (22); ladite partie séparée du rayonnement à fréquence doublée (21) est orientée vers le troisième cristal non-linéaire (5) par le biais d'éléments optiques (39) de sorte que les impulsions du troisième rayonnement signal (37) et du troisième rayonnement de pompage (8) se chevauchent dans le temps et dans l'espace en satisfaisant des conditions d'adaptation de phase non-colinéaire,
le rayonnement d'onde de signal amplifié dans le troisième cristal non-linéaire (5) est orienté vers un compresseur d'impulsions (41) conçu pour former des impulsions de sortie femtosecondes avec une durée de 5 fs à 100 fs.

8. Source laser selon la revendication 7, **caractérisée en ce que**
ledit amplificateur quantique (2) comprend un ou plusieurs amplificateurs lasers solides dopés au Nd, dans lequel au moins l'un desdits amplificateurs lasers solides dopés au Nd est un amplificateur régénératif,
afin d'obtenir une énergie d'impulsions à la sortie dudit amplificateur quantique (2) comprise entre 100 µJ et 100 mJ,
tandis que l'énergie des impulsions de sortie femtosecondes (42) générées dans le dernier étage OPA est comprise entre 10 µJ et 10 mJ.

9. Source laser selon l'une quelconque des revendications 5 à 8, **caractérisée en ce que**
ladite source laser primaire (1) de rayonnement ultra-court est un laser à base de Yb conçu pour irradier une ligne spectrale chevauchant un pic d'émission d'un milieu actif dopé au Nd.

10. Source laser selon la revendication 9, **caractérisée en ce que**
ledit laser à base de Yb est un laser à fibres à base de fibre optique monomode dopée au Yb, tandis que l'amplificateur quantique (2) repose sur un milieu actif Nd:YAG, Nd:YVO₄ou Nd:YLF.

11. Source laser selon l'une quelconque des revendications 5 à 10, **caractérisée en ce que**
l'énergie dudit rayonnement ultra-court (11) de la source laser primaire (1) ne dépasse pas 100 pJ et ledit système de conditionnement de rayonnement (15) comprend un préamplificateur (16), destiné à augmenter l'énergie des impulsions du rayonnement (11) jusqu'à (1÷10) nJ, et un élément optique supplémentaire (17) dans lequel une auto-modulation de phase des impulsions se produit.

12. Source laser selon l'une quelconque des revendications 5 à 10, **caractérisée en ce que**
l'énergie dudit rayonnement ultra-court (11) de la source laser primaire (1) est de l'ordre de (1÷10) nJ.

13. Source laser selon l'une quelconque des revendications 5 à 12, **caractérisée en ce que**
ledit système de conditionnement de rayonnement (15) repose sur des fibres optiques monomodes.

14. Source laser selon l'une quelconque des revendications 5 à 13, **caractérisée en ce que**
ledit générateur de lumière blanche (6) est une plaque de saphir ou de YAG.

15. Source laser selon l'une quelconque des revendications 5 à 14, **caractérisée en ce que**
la durée d'impulsion du rayonnement (26) obtenue à la sortie dudit compresseur d'impulsions (25), placé en aval du premier cristal non-linéaire (3), est de l'ordre de 100 fs à 200 fs.
